**Europäisches Patentamt**

**European Patent Office**

**Office européen des brevets**

(19)

(11) Veröffentlichungsnummer: **0 103 668**
**B1**

(12) # EUROPÄISCHE PATENTSCHRIFT

(45) Veröffentlichungstag der Patentschrift:
02.07.86

(51) Int. Cl.⁴: **H 02 G 1/08**

(21) Anmeldenummer: 83103137.2

(22) Anmeldetag: 30.03.83

(54) **Vorrichtung zum nachträglichen Verlegen von Kabeln in Schutzrohre.**

(30) Priorität: **20.08.82 DE 3231027**

(43) Veröffentlichungstag der Anmeldung:
**28.03.84 Patentblatt 84/13**

(45) Bekanntmachung des Hinweises auf die Patenterteilung:
**02.07.86 Patentblatt 86/27**

(84) Benannte Vertragsstaaten:
**AT BE CH FR GB IT LI LU NL SE**

(56) Entgegenhaltungen:
**DE-C-709 857**
**DE-C-970 843**
**FR-A-1 094 824**

(73) Patentinhaber: **Kumpf, Erich, Im Köpfen 14, D-7300 Esslingen (DE)**

(72) Erfinder: **Kumpf, Erich, Im Köpfen 14, D-7300 Esslingen (DE)**

(74) Vertreter: **Fuhlendorf, Jörn, Patentanwälte Dreiss, Hosenthien & Fuhlendorf Gerokstrasse 6, D-7000 Stuttgart 1 (DE)**

## Beschreibung

Die vorliegende Erfindung bezieht sich auf eine Vorrichtung zum nachträglichen Verlegen von mindestens einem weiteren Kabel in bereits mit mindestens einem Kabel bestückte Schutzrohre.

Elektrische Kabel, insbesondere Fernmeldekabel werden in im Erdboden verlegte und eingegrabene starre Schutzrohre aus Kunststoff eingezogen, wobei in Längenabschnitten von einigen 10 oder 100 m Einstiegsschächte für den Zugriff zu den Leitungen bzw. deren Verbindungen oder Verteilern vorgesehen sind. Die Schutzrohre sind normalerweise erheblich größer als das in ihm verlegte Kabel, wobei trotzdem im allgemeinen pro Schutzrohr nur ein Kabel verlegt ist. Wird ein neues Kabel, bspw. zur Erweiterung eines Telefonnetzes oder in Zukunft in Form von Glasfaserkabeln für das Kabelfernsehen oder das Bildtelefon verlegt, so muß erneut aufgegraben und parallel zu dem bisherigen Kabel ein in einem neuen Schutzrohr eingezogenes Kabel verlegt werden. Dies ist naturgemäß sehr zeit- und kostenaufwendig.

Aus der FR-A-1 094 824 ist eine Vorrichtung zum Einziehen von Kabeln in ein Schutzrohr bekannt. Bei dieser Vorrichtung ist eine Führungsschiene in einem oberen Bereich an der Innenseite des Schutzrohres befestigt, in der ein Zugelement von einem Ende des Schutzrohres zum anderen bewegbar ist. Am Zugelement wird das einzuziehende Kabel mittelbar oder unmittelbar angehängt. Diese Art der Kabelverlegung ist von einer speziellen Konstruktion des Schutzrohres abhängig und damit bei normalerweise verlegten einfachen Schutzrohren nicht einsetzbar.

Aufgabe der vorliegenden Erfindung ist es deshalb, eine Vorrichtung zum nachträglichen Verlegen von mindestens einem weiteren Kabel in bereits mit einem Kabel bestückte Schutzrohre zu schaffen, mit der unmittelbar oder mittelbar in das bereits verlegte Schutzrohr ohne weiteres ein zweites Kabel eingezogen werden kann, ohne daß der Erdboden erneut aufgegraben und ein neues Schutzrohr verlegt werden muß.

Diese Aufgabe wird bei einer Vorrichtung der genannten Art gelöst, durch einen in das Schutzrohr einziehbaren, dessen Innenraum in einen Bereich für dar/die vorhandene(n) und in einen weiteren Bereich für dar/die noch zu verlegende(n) Kabel unterteilenden Zwischenboden, der als ein flaches, in Querrichtung biegesteifes und in Längsrichtung zwar knickfestes, jedoch verwindbares Band augebildet ist, das zumindest im Bereich seines in das Schutzrohr einlaufenden vorderen Endes beidseitig mit einer sich an der Rohrinnenwandung abstützenden Höhenführungseinrichtung und frontseitig mit einer Längsführungseinrichtung versehen ist, wobei die Höhenführungseinrichtung und die Längsführungseinrichtung derart gestaltet sind, daß bei Einzug des Bandes in das Schutzrohr die erstere untere einen bestimmten Abstand des Bandes V über dem/den schon vorhandenen Kabel(n) sicherstellt und die letzten die Führung längs des/der schon vorhandenen Kabel(s) bewirkt.

Mit der erfindungsgemäßen Vorrichtung ist es möglich, in ein bereits mit einem Kabel bestücktes und im Erdboden verlegtes Schutzrohr mindestens ein weiteres Kabel einzuziehen, wobei eine Beschädigung des bereits eingezogenen bzw. verlegten Kabels mit Sicherheit vermieden ist. In bevorzugter Weise wird dabei mit der erfindungsgemäßen Vorrichtung entweder zunächst nur der Zwischenboden oder gleichzeitig mit dem Zwischenboden mindestens ein Kabel eingezogen. Der Zwischenboden dient der räumlichen Trennung und ggf. auch der elektrischen Abschirmung der beiden Kabel voneinander. Es versteht sich, daß statt des Kabels auch zunächst nur mindestens ein Zugseil und/oder mindestens ein Leerrohr zum nachträglichen Einziehen eines Kabels zusammen mit dem Zwischenboden eingezogen werden kann. Es ist auch möglich, den Zwischenboden nach dem Einziehen eines weiteren Kabels oder Leerrohr wieder herauszuziehen und an anderer Stelle oder später an dieser Stelle über zwei verlegte Kabel hinweg wieder zu verwenden. Der Antrieb der erfindungsgemäßen Vorrichtung wirkt in einfacher Weise mechanisch entweder unmittelbar auf den Zwischenboden oder auf ein mit dem Zwischenboden verbundenes Schub- oder Zuggestänge.

Die Breite des Zwischenbodens einschließlich der Höhenführung seinrichtung ist vorzugsweise nachzu gleich dem Innendurchmesser des Schutzrohres, so daß er sich stets im Mittenbereich des Schutzrohres bewegt. Seine Breite kann aber auch kleiner sein, so daß er sich in unteren Schutzrohrbereich bewegt, jedoch darf die Differenz zwischen Bodenbreite und Rohrinnendurchmesser nicht größer als der halbe Durchmesser des bereits verlegten Kabels sein.

Die konstruktive Ausführung der Höhenführungseinrichtung und der Kabelführungseinrichtung kann in vielfältiger Weise erfolgen. Bspw. wird gemäß einem Ausführungsbeispiel vorliegender Erfindung der Zwischenboden, der zweckmäßigerweise aus Kunststoff, bepw. Polyamid, einem glasfaserverstärkten Kunststoff oder Hart-PVC hergestellt ist, an seinem vorderen Ende mit einer gerollten oder wulstförmigen Anformung als Kabelführungseinrichtung versehen. Die Kabelführungseinrichtung rollt oder gleitet über und ggf. auf dem bereits verlegten, relativ starren Kabel entlang, wobei sie sich der Lage des Kabels anpasst und ggf. den Zwischenboden veranlasst, daß dieser sich schräg stellt und sich sozusagen durchschlängelt. Die seitlichen Ränder können dabei wulstförmig ausgebildet sein, so daß sie als Höhenführungenseinrichtung dienen. Dies ist ein relativ einfacher konstruktiver Aufbau, bei dem allerdings bei der Bewegung ausschließlich Gleitreibung auftritt, was für sehr lange Abschnitte zu Antriebsproblemen führen kann.

Gemäß einem anderen Ausführungsbeispiel vorliegender Erfindung ist deshalb die Höhenführungseinrichtung am Grundrahmen und/oder am Zwischenboden zweckmäßigerweise durch ein oder mehrere Paare von hintereinander angeordneten drehbar gelagerten Kugeln gebildet, die sich an der Innenwandung des Rohres abstützen. Dadurch ist ein leichter Lauf der Vorrichtung gewährleistet. Entsprechendes gilt für die Kabelführungseinrichtung, die über dem bereits eingezogenen Kabel sich entlang bewegt, ohne dies zu beschädigen. Dies wird zweckmäßigerweise mittels einer drehbaren Walze bzw. Rolle erreicht, die zylindrisch ausgebildet oder mit einer konkaven Ausnehmung versehen sein kann, so daß sie, wenn das verlegte Kabel seitlich und in einer gewissen Höhe innerhalb des Rohres liegt, sich der Kabellage anpasst, also sich entlang schlängelt und dadurch den Zwischenboden in eine Richtung schräg stellt.

Wie erwähnt, kann das Durchschieben des Zwischenbodens mittelbar über ein Schubgestänge erfolgen, derart, daß dieses mit dem Zwischenboden verbunden ist und mit Hilfe von Reibrollen angetrieben wird. Gemäß einem weiteren bevorzugten Ausführungsbeispiel vorliegender Erfindung erfolgt jedoch ein Reibwalzenantrieb unmittelbar am Zwischenboden, der zur Erhöhung der Knickfestigkeit mit einem oder vorzugsweise zwei parallelen Stahlbändern als Kern versehen ist. Durch diese Maßnahme ist zwar einerseits die Knickfestigkeit erhöht, aber andererseits nach wie vor gewährleistet, daß der Zwischenboden verwindbar ist und sich durch das verlegte Rohr sozusagen schlängeln kann.

Im folgenden wird die Erfindung anhand der in der Zeichnung dargestellten Ausführungsbeispiele näher beschrieben und erläutert.

Es zeigen:

Figur 1 in teilweise aufgebrochener Ansicht eine Vorrichtung zum nachträglichen Verlegen eines Kabels in ein Schutzrohr gemäß einem ersten Ausführungsbeispiel,

Figur 2 eine Draufsicht auf die Vorrichtung gemäß Pfeil II der Figur 1,

Figur 3 eine Vorderansicht der Vorrichtung gemäß Pfeil III der Figur 1,

Figur 4 einen Schnitt längs der Linie IV-IV der Figur 1, jedoch im Endzustand, in dem der Zwischenboden und ein weiteres Kabel im Rohr eingezogen sind,

Figur 5 einen Schnitt ähnlich dem der Figur 4, jedoch gemäß einer Variante bezüglich des Zwischenbodens,

Figur 6 eine Ansicht ähnlich der der Figur 1, jedoch gemäß einem zweiten Ausführungsbeispiel,

Figur 7 die Unteransicht gemäß Pfeil VII der Figur 6,

Figur 8 die Draufsicht auf eine Vorrichtung gemäß einem dritten Ausführungsbeispiel,

Figur 9 einen Schnitt längs der Linie IX-IX der Figur 8,

Figur 10 eine abgebrochene Seitenansicht einer Vorrichtung gemäß einem vierten Ausführungsbeispiel,

Figur 11 einen Schnitt ähnlich dem der Figur 9, jedoch gemäß einem fünften Ausführungsbeispiel, und

Figur 12 eine Variante des Ausführungsbeispiels der Figur 11.

Die Vorrichtungen 11, 11', 11'', 11''', 11'''' dienen zum Vorbereiten des nachträglichen Einziehens bzw. Verlegens eines weiteren elektrischen oder optischen Kabels 13 in ein Schutzrohr 14 aus Kunststoff, welches im Erdboden verlegt ist und bereits ein elektrisches Kabel 16 aufnimmt, das bodenseitig im Schutzrohr 14 liegt. Das Schutzrohr 14, das aus mehreren Abschnitten zusammengesetzt ist und zwischen zwei Einstiegsschächten verläuft, wird üblicherweise bei der Verlegung von bspw. . Telefonkabeln verwendet und ist hinsichtlich seines Durchmessers wesentlich größer als das Kabel 16 selbst, so daß noch genügend Platz innerhalb des Schutzrohres 14 zur Verlegung bzw. zum Einziehen weiterer Kabel vorhanden ist. Die Vorrichtungen 11, 11', 11'', 11''', 11'''' verwenden dazu einen Zwischenboden 12, 12', 12'', 12'', 12'', der in das Schutzrohr 14 eingezogen wird.

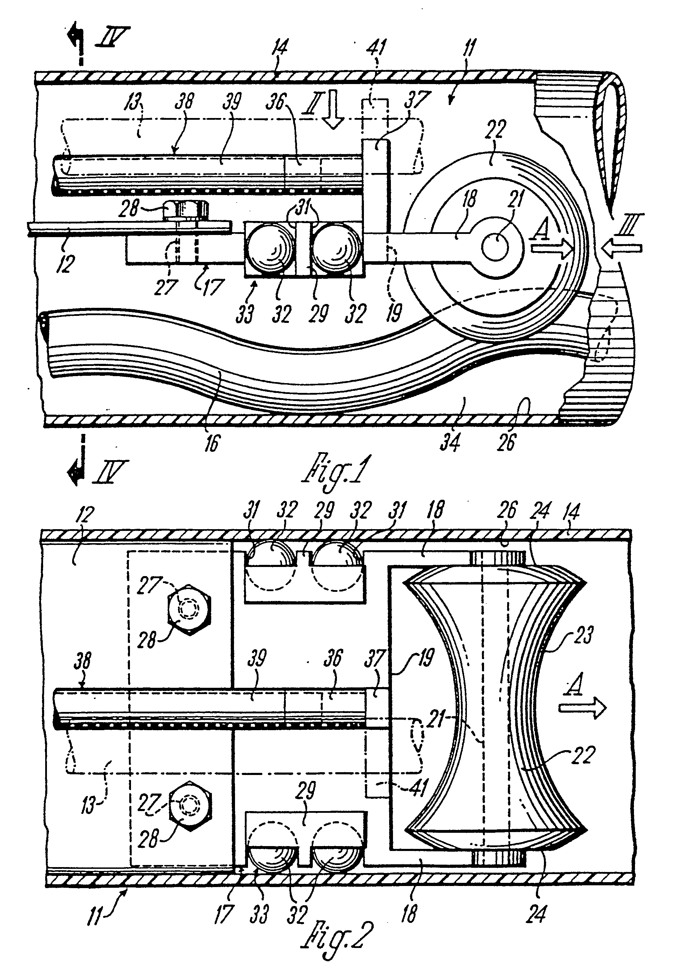

Die Vorrichtung 11 gemäß den Fig. 1 bis 4 besteht im wesentlichen aus einem Einschubrahmen 17 und einem mit diesem lösbar befestigbaren Zwischenboden 12. Der Einschubrahmen 17 besitzt eine flache steife Platte aus Metall oder Kunststoff, die an ihrem in Einschubrichtung A vorderen Ende eine Gabel 18 aufweist, die eine etwa rechteckförmige Aussparung 19 begrenzt. Quer zu dieser Aussparung 19 verläuft eine Achse 21, die in der Gabel 18 gehalten ist und auf der eine Walze 22 leicht drehbar gelagert ist, die als Führung für den Zwischenboden 12 längs des bereits vorhandenen Kabels 16 dient. Die Führungs Walze 22 besitzt eine konkave Ausnehmung bzw. Hohlkehle 23, die sich über die gesamte Länge der Walze 22 erstreckt und über deren Umfang verläuft. An den Stirnseiten 24 ist die Walze 22 entsprechend der Innenwandung 26 des Schutzrohres 14 kugelflächenförmig ausgebildet, wobei die Stirnseiten 24 einen Abstand von der Rohrinnenwandung 26 besitzen. Im Bereich der Gabel 18 sind die Stirnseiten 24 der Walze 22 abgeflacht. Die Führungs Walze 22 ist entweder vollständig aus Kunststoff oder Gummi gefertigt, oder besitzt eine entsprechend belegte weiche Umfangsfläche, um beim Überrollen des Kabels 16 dieses nicht zu beschädigen.

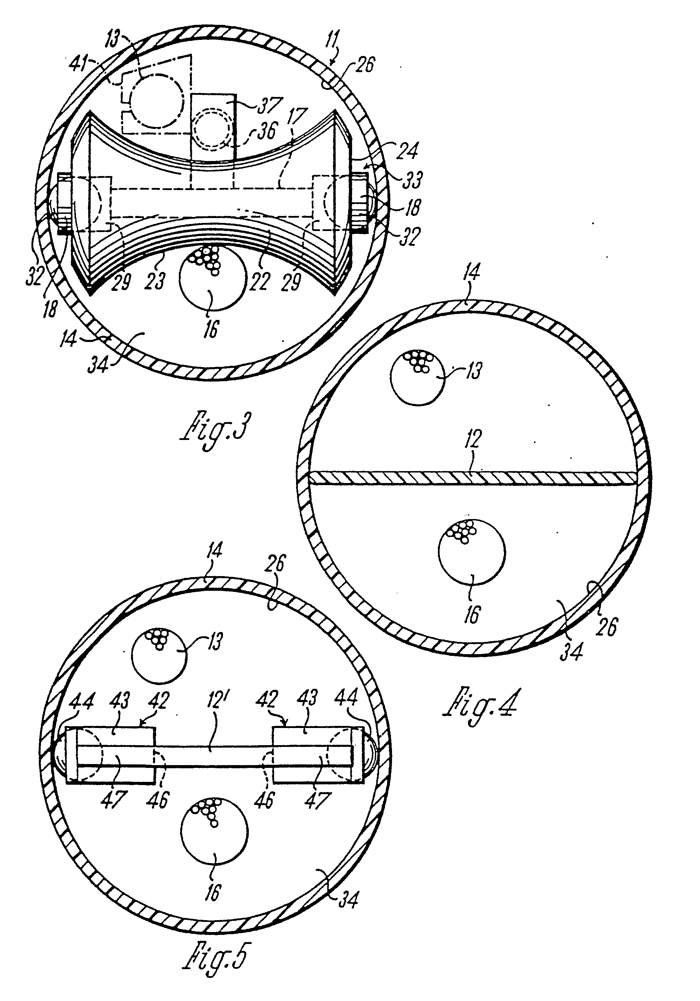

An seinem in Einschubrichtung A hinteren Ende ist der Einschubrahmen 17 mit Gewindebohrungen 27 und Schrauben 28 versehen, die zu lösbaren Befestigung des Zwischenbodens 12 dienen. In einem Bereich zwischen den Befestigungselementen 27, 28 und der Gabel 18 weist der Einschubrahmen 17 in seinen verdickten Seitenrändern 29 jeweils zwei in Längsrichtung im Abstand hintereinander angeordnete Taschen 31 auf, in denen Kugeln 32 gelagert sind, die zusammen die Höhenführung 33 der Vorrichtung 11 bzw. des Einschubrahmens 17 bilden. Wie insbesondere der Figur 3 zu entnehmen ist, ist die lichte Weite zwischen den Außenbereichen der Kugeln 32 bzw. der Durchmesser der Höhender Kugeln 32 bzw- der Durchmesser führung 33 etwa gleich dem Innendurchmesser des Schutzrohres 14. Auf diese Weise besteht während des Einschiebens oder Einziehens der Vorrichtung 11 in jedem Fall zwischen einem bodenseitigen Innenwandungsbereich des Schutzrohres 14 und der Lageführungswalze 22, dem Einschubrahmen 17 und dem nachfolgenden Zwischenboden 12 ein ausreichender Raum 34, in dem sich das bereits vorhandene Kabel 16 befindet oder in den dieses von der Walze 22 gedrängt ist. Dabei spielt es keine Rolle, ob der Einschubrahmen 17 bzw. der Zwischenboden 12, wie in der Zeichnung dargestellt, genau horizontal oder nach der einen oder anderen Richtung schräg verlaufend, also geneigt innerhalb des Schutzrohres 14 angeordnet ist. Es versteht sich, daß in diesem Zusammenhang der Begriff "Zwischenboden" auch den Begriff "Zwischenwand" umfasst, wenn sich im Extremfalle die Vorrichtung 11 und bzw. der Zwischenboden 12 während des Durchschiebens durch das Schutzrohr 14 nicht waagerecht wie in Figur 3 oder nach der einen oder anderen Seite schräg (siehe auch Figur 12), sondern stattdessen senkrecht gestellt hat. Diese Lage wird, da der Zwischenboden 12 verwindbar ist, von der Lage des Kabels 16 im Schutzrohr 14 bestimmt.

Der Einschubrahmen 17 besitzt außerdem einen Hülsenansatz 36, der parallel zur Grundplatte 17 in Einschubrichtung A verläuft und der an einem an der Grundplatte 17 befestigten Halter 37 angebracht ist. In den Hülsenansatz 36 ist ein Gestänge 38 einsteckbar, das hier zum Schieben der erfindungsgemäßen Vorrichtung 11 durch das Schutzrohr 14 vorgesehen ist. Das Gestänge 38 besteht entweder aus einer Teleskopstange oder aus mehreren ineinander steckbaren oder gelenkig miteinander verbundenen rohrförmigen Stangen 39, von denen eine in den Fig. 1 u. 2 gezeigt ist. Wird der Hülsenansatz 36 nicht derart angebracht, daß er zum in Einschubrichtung A hinteren Ende der Grundplatte 17 zeigt, sondern zum vorderen Ende, so wird ein Zuggestänge verwendet, das entsprechend ausgebildet ist.

Wie in den Figuren 1 bis 3 schematisch strichpunktiert angedeutet ist, ist bei einer Variante dieses Ausführungsbeispiels eine Klemmvorrichtung 41 am Einschubrahmen 17 befestigt, in die das zusätzliche Kabel 13 leicht lösbar einklemmbar ist. Es versteht sich, daß es auch möglich ist, die Klemmevorrichtung 41 und/oder eine weitere Klemmvorrichtung derart auszubilden, daß sie mindestens ein Zugseil und/oder mindestens ein flexibles Leerrohr leicht lösbar aufnehmen kann, so daß zusätzlich oder statt des zusätzlichen Kabels 13 mindestens ein Zugseil oder Leerrohr miteingezogen wird, mit Hilfe dessen dann ein oder mehrere zusätzliche Kabel später verlegt bzw. eingezogen werden können.

Das Einziehen des Zwischenbodens 12 erfolgt in der Weise, daß dieser mit seinem einen Ende am Einschubrahmen 17 mit Hilfe der Schrauben 28 befestigt wird. Gleichzeitig kann, wie erwähnt, entweder das zweite Kabel 13 und/ oder ein Zugseil und/oder Leerrohr befestigt werden. Daraufhin werden die einzelnen rohrförmigen Stangen 39 an den Einschubrahmen 17 angesetzt und so diese schrittweise durch das Schutzrohr 14 geschoben, bis der Einschubrahmen 17 mit den Zwischenboden 12 am anderen Ende des Schutzrohres 14 bzw. im Bereich des dort befindlichen Einstiegsschachtes angekommen ist. Auf diese Weise ist der Zwischenboden 12 in einfacher und bequemer Weise in dem Schutzrohr 14 verlegt. Der Zwischenboden 12 kann im Schutzrohr 14 verbleiben oder nach Verlegen des Kabels 13 und/oder eines Zugseiles wieder herausgezogen werden.

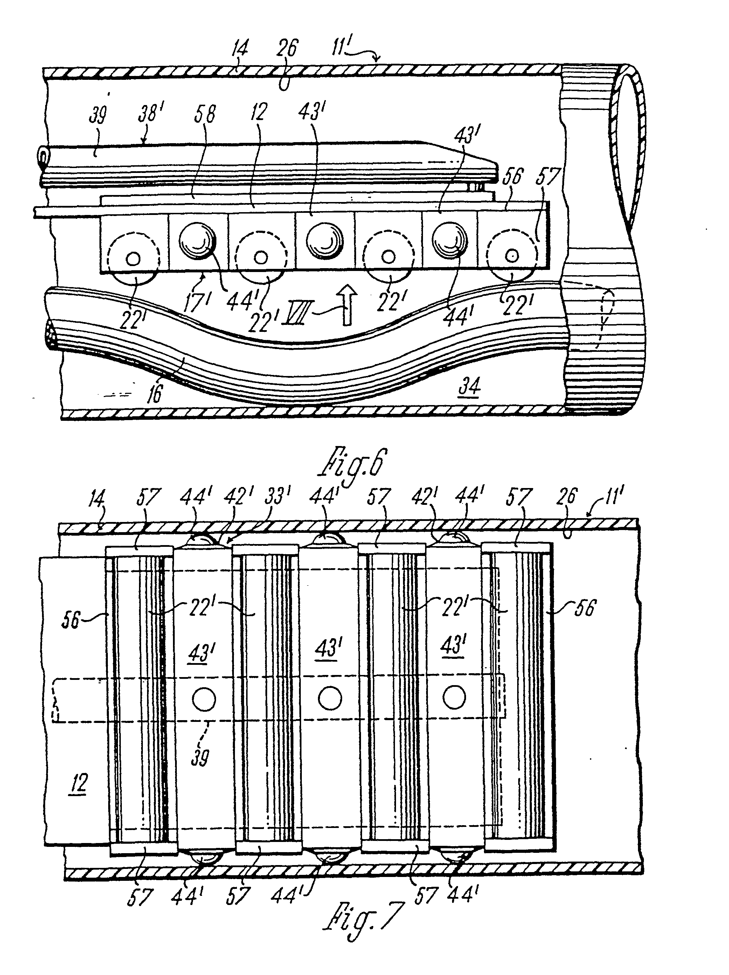

Der Zwischenboden 12, der zur räumlichen und ggf. auch zur elektrischen Trennung der beiden Kabel 13 und 16 dient, ist bspw. aus einem in Querrichtung biegesteifen Kunststoffstreifen bzw. -band hergestellt, dessen Seitenkanten, wie Figur 4 zeigt, abgerundet sind. In Längsrichtung ist der Streifen vorzugsweise flexibel, so daß er von einer Rolle abgezogen und nach Abschluß des Einziehens entsprechend abgeschnitten werden kann.

Gemäß einer anderen Variante dieses Ausführungsbeispiels, wie sie in Figur 6 gezeigt ist, ist der Zwischenboden 12' über seine gesamte Länge abschnittweise mit einer Kugelführung 42 versehen. Jede dieser Kugelführungen 42 besteht aus einem Käfig 43, in dem eine Kugel 44 gelagert ist. Der Käfig 43 ist dabei in einer Ausnehmung 46 in den Seitenrändern 47 des Zwischenbodens 12' befestigt. Die Kugeln 44 stehen dabei etwas über die Seitenränder 47 des Zwischenbodens 12' über, so daß nur diese sich an der Rohrinnenwandung 26 im Mittenbereich bzw. in Durchgangshöhe abstützen. Die Kugelführungen 42 sind dabei in Längsrichtung des Zwischenbodens 12' in gleichmäßigem Abstand angeordnet und erleichtern somit ein Einziehen insbesondere eines sehr langen Zwischenbodens 12'. Auch bei diesem Ausführungsbeispiel ist der Zwischenboden 12' streifen- bzw. bandartig hergestellt und entweder ganz aus Kunststoff und ggf. mit einer metallischen Abschirmung, bspw. einem Netz versehen, oder unmittelbar aus Blech hergestellt. Auch hier ist der Zwischenboden 12' aufwickelbar ausgebildet; er ist jedoch wegen der Kugelführungen 42 gegenüber dem Zwischenboden 12 der Figuren 1 bis 4 etwas schmäler.

Das Schub- oder Zuggestänge 38 kann entweder unmittelbar von Hand oder mittels einer motorischen Antriebsvorrichtung bewegt werden, die in nicht dargestellter Weise zwei Seilrollen besitzt, zwischen denen die rohrförmigen Stangen reibschlüssig hindurchführbar sind und die ein den Stangen angepasstes Profil besitzen. Eine oder beide Seilrollen sind über ein Getriebe von einem Motor angetrieben.

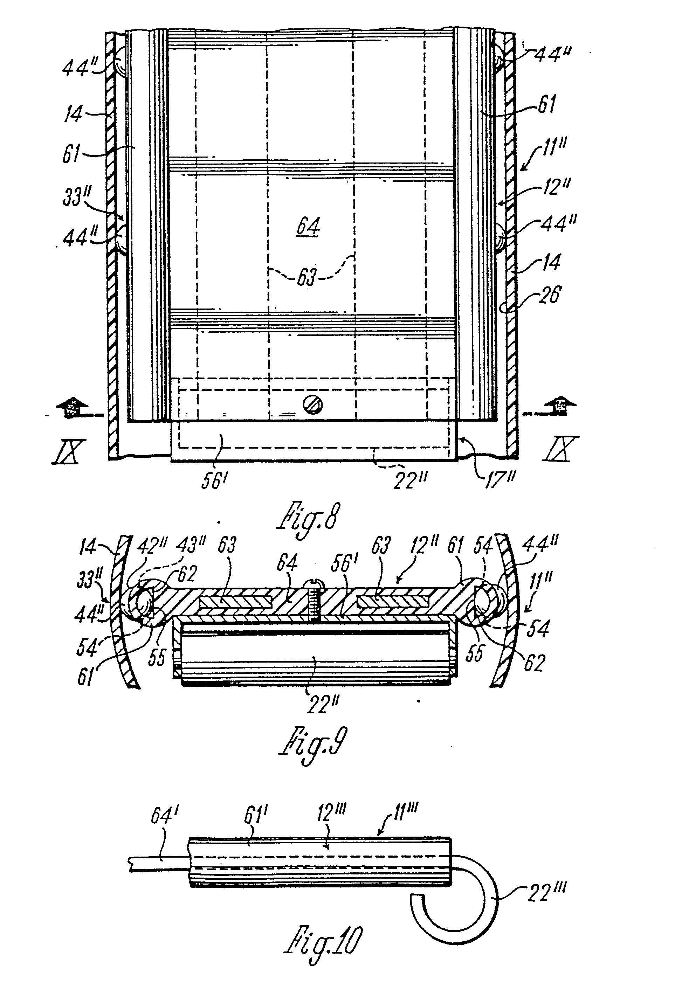

Bei der in den Figuren 6 und 7 dargestellten Vorrichtung 11' gemäß einem zweiten Ausführungsbeispiel wird ebenfalls ein Zwischenboden 12 gemäß Figur 4 oder 12' gemäß Figur 5 verwendet, der jedoch mit einem Einschubrahmen 17' lösbar verbindbar ist. Der bandförmige Zwischenboden 12 oder 12' ist dabei bspw. aus einem glasfaserverstärkten Kunststoff, bspw. einem Polyamid oder aus Hart-PVC hergestellt. Der Einschubrahmen 17' besitzt bei diesem Ausführungsbeispiel vier hintereinander angeordnete Führungswalzen 22', die zylindrisch ausgebildet sind und drei Kugelführungen 42' als Höhenführung 33', die jeweils zwischen zwei hintereinander angeordneten Walzen 22' vorgesehen sind. Der Einschubrahmen 17' besitzt eine obere Befestigungsplatte 56, die im Abstand hintereinander angeordnete paarweise nach unten gebogene Lappen 57 aufweist, an denen die Walzen 22' drehbar gelagert sind. Zwischen jeweils zwei Lappen 57 sind Käfige 43' für die Kugeln 44' der Kugelführungen 42' vorgesehen. An der Oberseite der Befestigungsplatte 56 ist das vordere Ende des Zwischenbodens 12 oder 12' vorzugsweise unter Auflegen einer zusätzlichen Platte 58 mittels nicht dargestellter Schraubverbindungen befestigt. Auf der Befestigungsplatte 56 des Einschubrahmens 17' ist außerdem das vordere Ende eines entsprechenden Schubgestänges 38' lösbar befestigbar.

Im übrigen entspricht die Vorrichtung 11' im wesentlichen. der Vorrichtung 11 der Figuren 1 bis 4, insbesondere was die Abmessungen und die Materialauswahl der Führungs Walze 22' anbetrifft. Auch ist es möglich, an der Befestigungsplatte 56 oder der zusätzlichen Platte 58 eine der Klemmevorrichtung 41 entsprechende Kabel-, Seil- oder Rohrklemme vorzusehen. Es versteht sich, daß die Anzahl der Führungswalzen 22' und der Kugelführungen 42' auch größer oder kleiner als dargestellt sein kann.

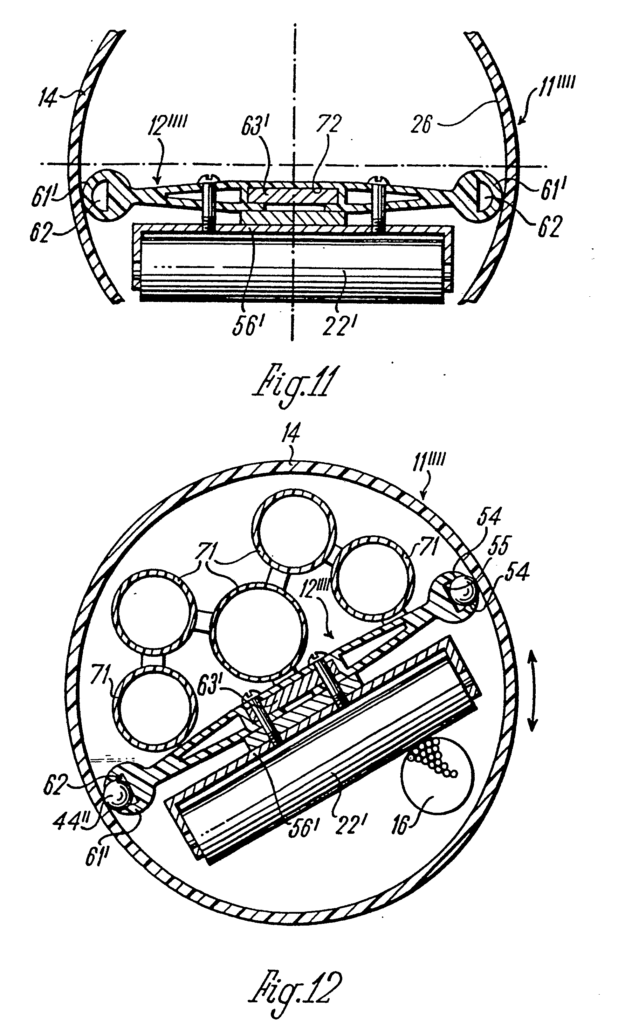

Beim dritten Ausführungsbeispiel gemäß den Figuren 8 und 9 wird bei der Vorrichtung 11'' ein Zwischenboden 12'' verwendet, der mit einem Einschubrahmen 17'' verbunden ist, welcher lediglich aus einer einzigen Führungs Walze 22'' besteht. Der Einschubrahmen 17'' ist dabei lediglich aus einer U-förmig gebogenen Blechplatte 56' oder Kunststoffplatte gebildet, in der die Walze 22'' drehbar gelagert ist und die mit dem Zwischenboden 12'' lösbar befestigbar ist. Der Zwischenboden 12'' ist ebenfalls aus Kunststoff, wie Polyamid, Polyester, Hart-PVC hergestellt und besitzt an seinen längsverlaufenden Rändern jeweils einen Wulst 61, der an die bandförmige Mitte angeformt ist und der einen bspw. etwa halbkreisförmigen Hohlraum 62 aufweist. Der Zwischenboden 12'' wird nicht mit einem Schubgestänge verbunden, sondern wird unmittelbar selbst in das Schutzrohr 14 eingeschoben. Zur Erhöhung der Knicksteifigkeit ist der Zwischenboden 12'' deshalb dicker und/oder er besitzt zwei parallel zueinander angeordnete Stahlbänder 63, die in den mittleren Bereich 64 des Zwischenbodens 12'' eingelassen sind. Die beiden Stahlbänder 63 verlaufen im Abstand voneinander und im Abstand zum Wulst 61 über die gesamte Länge des Zwischenbodens 12''. Trotz der Stahlbänder 63 kann sich der Zwischenboden 12'' durch das Schutzrohr 14 schlängeln und der Zwischenboden 12'' kann trotz dieser Stahlbänder 63 und der Wülste 61 von einer Rolle abgezogen werden.

Da die Wülste 61 mit einem relativ großen Radius versehen sind, kann es bei kurzen Schutzrohrabschnitten ausreichen, wenn die zwischen der Höhenführung 33'', die durch diese Wülste 61 gegeben ist, und dem Innenumfang des Schutzrohres 14 nur Gleitreibung auftritt. Bei längeren Abschnitten von Schutzrohren 14 bzw. von Zwischenböden 12'', ist es jedoch vorteilhaft, für die Höhenführung 33'' auch-hier Kugelführungen 42'' vorzusehen, wie dies in den Figuren 8 und 9 gezeigt ist. Diese Kugelführungen 42'' sind dadurch gebildet, daß in die Wülste 61 abschnittsweise von außen Kugelnäpfe 43'' in Form von Bohrungen von außen eingebracht werden. Diese Näpfe 43'' besitzen dann eine derartige Öffnung nach außen, daß Kugeln 44'' schnappend in die Näpfe 43'' eingedrückt werden können, wobei die Kugeln 44'' in den Kugelnäpfen 43'' drehbar gelagert sind und sich nur an den Bohrungsrändern 54 der inneren ebenen Begrenzungsfläche 55 des Hohlraumes 62 abstützen.

Bei dieser Vorrichtung 11'' ist also der Zwischenboden 12'' mit integrierten Stahlbändern zur Erhöhung der Knickfestigkeit und mit Höhenführungen versehen, die einerseits angeformt sind und andererseits durch zusätzliche Maßnahmen von Gleitreibung auf Rollreibung schnell umgestellt werden können. Dies heißt, daß der Zwischenboden 12'' mit Kugelhöhenführung in Durchmesserhöhe des Schutzrohres und mit Gleithöhenführung knapp unterhalb dieser Höhe sich hindurch bewegt (siehe auch Figuren 11 und 12). Der Antrieb zum Einschieben des Zwischenbodens 12'' entspricht dem in Verbindung mit dem Ausführungsbeispiel der Figuren 1 bis 4 beschriebenen Antrieb, mit dem Unterschied, daß statt der Seilrollen zwei Reibwalzen verwendet werden, die den Zwischenboden 12'' reibschlüssig zwischen sich aufnehmen.

Bei dem in Figur 10 dargestellten vierten Ausführungsbeispiel ist eine Vorrichtung 11'' dargestellt, die praktisch nur noch aus einem Zwischenboden 12''' besteht. Dieser Zwischenboden 12''' ist im wesentlichen genauso aufgebaut wie der Zwischenboden 12'' der Figuren 8 und 9, insbesondere was den mittigen Bereich 64', die Stahlbänder 63' und die Wülste 61' anbetrifft. Anders ist bei diesem Zwischenboden 12''' jedoch, daß auch die Kabelführung, die gemäß den Figuren 8 und 9 in Form der Walze 22'' befestigt ist, an dem Zwischenboden 12''' unmittelbar angeformt ist. Mit anderen Worten, beim Zwischenboden 12''' ist ein Kabelführungswulst 22''' angeformt, der den mittigen Bereich 64' verlängert und der entweder, wie in Figur 10 dargestellt, durch Umbiegen des mittigen Bereichs 64' oder durch die Bildung eines querverlaufenden Wulstes ähnlich dem Wulst 61' am vorderen Ende des mittigen Bereiches 64' gebildet ist. Bei diesem Ausführungsbeispiel erfolgt also sowohl die Höhen- als auch die Lagenführung bzgl. des bereits verlegten Kabels bei der Bewegung über die Gleitreibung. Es versteht sich, daß die Höhenführung, ähnlich wie bei der Variante der Figuren 8 und 9 auch durch Kugelführungen gebildet sein kann.

Die Vorrichtung 11'''' gemäß Figur 11 besitzt einen Zwischenboden 12'''', der ähnlich dem Boden 12'''' der Figur 9 aus Kunststoff einstückig geformt und aufgebaut, jedoch mit einer mittigen Hinterschneidung 72 an der Unterseite derart versehen ist, daß ein Stahlband 63' einschiebbar ist. Die Wülste 61' sind gleich und ebenfalls mit einem Hohlraum 62 versehen. An der Unterseite des Zwischenbodens 12'''' ist die Führungs Walze 22'' befestigt.

Figur 12 zeigt eine Variante des Zwischenbodens 12'''' dergestalt, daß er an seiner Oberseite mit mehreren flexiblen Leerrohren 71 bestückt ist, die über die Länge abschnittsweise miteinander und mit dem Zwischenboden 12'''' verbunden sind. Es ist auch möglich, Leerrohre anderer Form vorzusehen oder den Zwischenboden im oberen Bereich im Querschnitt gesehen wabenförmig auszubilden. Wesentlich ist lediglich, daß der Zwischenboden nach wie vor verwindbar ist.

Figur 12 zeigt auch eine Schrägstellung des Zwischenbodens aufgrund der Lage des Kabels 16. Außerdem ist hier der Zwischenboden 12'''' mit Kugelführungen 44'' versehen.

Je nach Durchmessergröße des Schutzrohres 14 im Verhältnis zum Durchmesser des bereits eingezogenen Kabels 16 können mit den Vorrichtungen 11, 11,' 11''', 11'''' oder 11'''' auch bspw. zwei übereinander angeordnete Zwischenböden 12, 12', 12'' bzw. 12''' eingezogen werden, soweit dies in der unteren Halbschale des Schutzrohres 14 möglich ist, da sich ja der Zwischenboden nur dort an der Rohrinnenwandung 26 abstützen kann, wo eine gedachte Schnittlinie durch das Rohr 14 kleiner ist als die Durchmesserlinie.

## Patentansprüche

1. Vorrichtung zum nachträglichen Verlegen von mindestens einem weiteren Kabel (13) in bereits mit mindestens einem Kabel (16) bestückte Schutzrohre (14) <u>gekennzeichnet durch</u> einen in das Schutzrohr (14) einziehbaren, dessen Innenraum in einen Bereich für das/die vorhandene(n) und in einen weiteren Bereich für das/die noch zu verlegende(n) Kabel unterteilenden Zwischenboden (12, 12', 12'', 12''', 12''''), der als ein flaches, in Querrichtung biegesteifes und in Längsrichtung zwar knickfestes, jedoch verwindbares Band ausgebildet ist, das zumindest im Bereich seines in das Schutzrohr (14) einlaufenden vorderen Endes beidseitig mit einer sich an der Rohrinnenwandung (26) abstützenden Höhenführungseinrichtung (33, 33', 33'') und frontseitig mit einer Längsführungseinrichtung (22, 22', 22'', 22''') versehen ist, wobei die Höhenführungseinrichtung (33, 33', 33'') und die Längsführungseinrichtung (22, 22', 22'', 22''') derart gestaltet sind, daß bei Einzug des Bandes in das Schutzrohr (14) die erstere einem bestimmten Abstand des Bandes über dem/den schon vorhandenen Kabel(n) (16) sicherstellt und die letztere die Führung längs des/der schon vorhandenen Kabel(s) (16) bewirkt.

2. Vorrichtung nach Anspruch 1, dadurch gekennzeichnet, daß die Breite des Zwischenbodens (12, 12', 12'', 12''', 12'''') einschließlich seiner Höhenführungseinrichtung (33, 33', 33'') nahezu gleich ist dem Innendurchmesser des Schutzrohres (14).

3. Vorrichtung nach Anspruch 1 oder 2, dadurch gekennzeichnet, daß mit dem vorderen Ende des Zwischenbodens (12, 12'''') das zusätzlich zu verlegende Kabel (13) und/oder mindestens ein Zugseil und/oder mindestens ein Leerrohr (71) lösbar verbindbar ist.

4. Vorrichtung nach einem der Ansprüche 1 bis 3, dadurch gekennzeichnet, daß die Kabelführungseinrichtung (22''') am vorderen Ende des Zwischenbodens (12''') angeformt ist (Fig. 10).

5. Vorrichtung nach einem der Ansprüche 1 bis 3, dadurch gekennzeichnet, daß die Kabelführungseinrichtung (22, 22') an einem in das Schutzrohr (14) einführbarer Rahmen (17, 17') vorgesehen ist, der mit dem den Zwischenboden (12) bildenden Band-vorzugsweise lösbarverbindbar ist (Fig. 1 bis 7).

6. Vorrichtung nach Anspruch 5, dadurch gekennzeichnet, daß der Rahmen (17, 17') beidseitig mit der sich an der Innenwandung (26) des Schutzrohres (14) abstützenden Höhenführungseinrichtung (33, 33') versehen ist.

7. Vorrichtung nach einem der Ansprüche 1 bis 5, dadurch gekennzeichnet, daß das dem Zwischenboden (12'', 12''', 12'''') bildende Band über seine gesamte Länge beidseitig mit der sich an der Innenwandung (26) des Schutzrohres (14) abstützenden Höhenführungseinrichtung (33'') versehen ist.

8. Vorrichtung nach einem der vorhergehenden Ansprüche, dadurch gekennzeichnet, daß mit dem Zwischenboden (12) bzw. mit dem Rahmen (17, 17') ein Schub- oder Zuggestänge (38) koppelbar ist.

9. Vorrichtung nach einem der Ansprüche 1 bis 7, dadurch gekennzeichnet, daß in den Zwischenboden (12'', 12'''') mindestens ein Stahlband (63, 63') integriert ist (Fig. 8, 9; 11, 12).

10. Vorrichtung nach einem der vorhergehenden Ansprüche, dadurch gekennzeichnet, daß die Höhenführungseinrichtung (33) durch in seitliche Taschen (31) des Rahmens (17) und/oder Zwischenbodens (12) gelagerte Kugeln (32) gebildet ist.

11. Vorrichtung nach einem der Ansprüche 3 oder 5 bis 10, dadurch gekennzeichnet, daß die Kabelführungseinrichtung (22, 22', 22'') durch eine Walze gebildet ist, die auf einer in Durchmesserrichtung des Rohres (14) verlaufenden Achse (21) drehbar gelagert ist.

12. Vorrichtung nach Anspruch 11, dadurch gekennzeichnet, daß die Walze (22) in einer Aussparung (19) des Rahmens (17) angeordnet und die Achse (21) in einer die Aussparung (19) bildenden Gabel (18) befestigt ist (Fig. 1, 2).

13. Vorrichtung nach Anspruch 11 oder 12, dadurch gekennzeichnet, daß die Walze (22) mit einer sich über ihre gesamte Länge erstreckenden, umlaufenden Hohlkehle (23) versehen ist (Fig. 2, 3).

14. Vorrichtung nach Anspruch 8, dadurch gekennzeichnet, daß das Schub- bzw. Zuggestänge (38) aus einzelnen, gelenkig miteinander verbundenen, rohrförmigen Stangen (39) besteht.

15. Vorrichtung nach einem der Ansprüche 8 oder 9, dadurch gekennzeichnet, daß das Schub- bzw. Zuggestänge (38) oder der Zwischenboden (12, 12', 12'', 12''', 12'''') mit einer Antriebsvorrichtung verbindbar ist.

16. Vorrichtung nach Anspruch 15, dadurch gekennzeichnet, daß die Antriebsvorrichtung zwei Seilrollen oder Walzen aufweist, zwischen denen das rohrförmige Gestänge (38) bzw. der Zwischenboden (12) reibschlüssig hindurchführbar ist und von denen mindestens eine mit einer Antriebswelle versehen ist.

17. Vorrichtung nach einem der vorhergehenden Ansprüche, dadurch gekennzeichnet, daß das den Zwischenboden (12, 12', 12'', 12''', 12'''') bildende Band aus Kunststoff ist.

18. Vorrichtung nach Anspruch 17, dadurch gekennzeichnet, daß das Band eine metallische Abschirmung besitzt.

19. Vorrichtung nach einem der vorhergehenden Ansprüche, dadurch gekennzeichnet, daß das den Zwischenboden (12, 12', 12'', 12''', 12'''') bildende Band aufwickelbar ausgebildet ist.

20. Vorrichtung nach einem der Ansprüche 7 bis 19, dadurch gekennzeichnet, daß das den Zwischenboden (12'', 12''', 12'''') bildende Band mit wulstförmigen Rändern (61, 61') versehen ist (Fig. 8 bis 12).

21. Vorrichtung nach Anspruch 20, dadurch gekennzeichnet, daß die wulstförmigen Ränder (61, 61') des Zwischenbodens (12'', 12''', 12'''') mit in Längsrichtung im Abstand angeordneten Kugelnäpfen (43'') zum schnappenden Eindrücken von zur Höhenführungseinrichtung (33'')

gehörenden Kugeln (44'') versehen sind.

22. Vorrichtung nach einem der vorhergehenden Ansprüche, dadurch gekennzeichnet, daß das den Zwischenboden (12'''') bildende Band auf seiner Oberseite mit einem oder mehreren - vorzugsweise flexiblen - Leerrohren (71) versehen ist (Fig. 12).

23. Vorrichtung nach Anspruch 22, dadurch gekennzeichnet, daß das oder die Leerrohre (71) abschnittsweise miteinander und mit dem Zwischenboden (12'''') verbunden sind.

24. Vorrichtung nach einem der Ansprüche 1 bis 21, dadurch gekennzeichnet, daß der Rahmen (17) oder der Zwischenboden (12) mit einem Befestigungsorgan (41) für mindestens ein zusätzlich zu verlegendes Kabel (13) und/oder mindestens ein Zugseil und/oder mindestens ein Leerrohr (71) versehen ist.

25. Vorrichtung nach Anspruch 24, dadurch gekennzeichnet, daß das Befestigungsorgan (41) eine Kabel- bzw. Seil-bzw. Rohrklemme ist.

**Claims**

1. Device for the subsequent installation of at least one further cable (13) into a protective tube (14), which is already equipped with at least one cable (16), characterized by an intermediate floor (12, 12', 12''. 12''', 12''''), which can be drawn into the protective tube to separate the interior space of the same into an area for the already present and into an area for the to be installed cable, said intermediate floor being a flat band, which is stiff against bending in transverse direction and which, in longitudinal direction, is resistant to buckling, but which, however, can be twisted along said longitudinal direction, said band having within the area of it's leading end, which extends into the protective tube (14), at it's sides altitude guidance means (33, 33', 33'') abutting against the interior wall of the protective tube (26), and further, at it's front edge, lateral guidance means (22, 22', 22'', 22'''), and wherein the altitude guidance means (33, 33', 33'') and the lateral guidance means (22, 22', 22'', 22''') are designed such that upon pulling the band into the protective tube (14) said first mentioned altitude guidance means provide for a predetermined distance of the band above the already present cable(s) (16) and the second mentioned lateral guidance means provide for the guidance along the already present cable(s).

2. Device in accordance to claim 1, characterized in that the widths of the intermediate floor (12, 12', 12'', 12''', 12'''') including it's altitude guidance means (33, 33,' 33'') is aproximately equal to the interior diameter of the protective tube (14).

3. Device in accordance to claim 1 or 2, characterized in that the cable (13), which is to be additionally installed, and/or at least one pulling cable and/or at least one hollow tube (71) can be disengageably connected to the leading ledge of the intermediate floor (12, 12'''').

4. Device in accordance to one of claims 1 to 3, characterized in that the cable guidance means (22''') is provided by forming the leading end of the intermediate floor (12''') correspondingly (fig. 10).

5. Device in accordance to one of claims 1 to 3, characterized in that the cable guidance means (22, 22') is provided on a frame (17, 17'), which can be introduced into the protective tube (14), and wherein said cable guidance means can be connected to the intermediate floor (12), preferably in a disengageable manner (fig. 1 to 7).

6. Device in accordance to claim 5, characterized in that the frame (17, 17') at it's both ends is provided with said altitude guidance means (33, 33') abutting the interior wall (26) of the protective tube (14).

7. Device in accordance to one of claims 1 to 5, characterized in that the band forming the intermediate floor (12'',12''',12''''), along it's total length and on it's both sides, is provided with said altitude guidance means (33'') abutting the interior wall (26) of the protective tube (14).

8. Device in accordance to one of the preceeding claims, characterized in that a pushing or pulling linkage equipment can be coupled to the intermediate floor (12) or to the frame (17, 17') respectively.

9. Device in accordance to one of claims 1 to 7, characterized in that at least one steel band (63, 63') is integrally provided within the intermediate floor (12'', 12'''') (fig. 8, 9; 11, 12).

10. Device in accordance to one the preceeding claims, characterized in that the altitude guidance means (33) is formed by balls (32) supported in pockets (31) provided at the sides of the frames (17) and/or the intermediate floor (12).

11. Device in accordance to one of the claims 3 or 5 to 10, characterized in that the cable guidance means (22, 22', 22'') are provided by a drum, which is rotatably supported on a shaft (21) extending in the direction of the diameter of the protective tube (14).

12. Device in accordance to claim 1, characterized in that the drum (22) is provided in a recess (19) of the frame, and in that the shaft (21) is mounted to a fork (18) by which said recess (19) is provided (fig. 1, 2).

13. Device in accordance to claim 11 or 12, characterized in that the drum (22) is provided with a hollow flute (23) extending arround the drum and along it's total length (fig. 2, 3).

14. Device in accordance to claim 8, characterized in that the push- or pull-linkage respectively (38) consists of individual tube-shaped rods (39) pivotably connected to each other.

15. Device in accordance to one of claims 8 or 9, characterized that the push-or pull-linkage (38) respectively or the intermediate floor (12, 12', 12'', 12''', 12'''') can be connected to a driving means.

16. Device in accordance to claim 15, characterized in that the driving means comprises two rope rolls or drums, between which the tube shaped linkage (38) of the intermediate floor (12) respectively can be lead through with frictional contact, and wherein at least one of said rolls or drums is provided with a driving shaft.

17. Device in accordance to one of the preceeding claims, characterized in that the band, which forms the intermediate floor (12, 12', 12'', 12''', 12'''') is of plastic.

18. Device in accordance to claim 17, characterized in that the band has a metallic shield.

19. Device in accordance to one of the preceeding claims, characterized in that the band forming the intermediate floor (12, 12', 12'', 12''', 12'''') can be wound up.

20. Device in accordance to one of claims 7 to 19, characterized in that the band forming the intermediate floor (12'', 12''', 12'''') is provided with bulge shaped wheels (fig. 8 to 12).

21. Device in accordance to claim 20, characterized in that the bulge spaped edges (61, 61') of the intermediate floor (12'', 12''', 12'''') are provided in longitudinal direction with spaced ball receiving bowls (43'') for a snap reception of balls (44''), which are part of the altitude guidance means (33'').

22. Device in accordance to one of the preceeding claims, characterized in that the band forming the intermediate floor (12'''') is provided at it's other side with one or more -preferably flexible- empty tubes (71) (fig. 12).

23. Device in accordance to claim 22, characterized in that the empty tube or the empty tubes (21) are connected with each other and with the intermediate floor (12'''') at certain portions.

24. Device in accordance to claim 1 to 21, characterized in that the frame (17) or the intermediate floor (12) is provided with a fastening member (41) for at least one additionally to be installed cable (13) and/or at least one pulling rope and/or at least one empty tube (71).

25. Device in accordance to claim 24, characterized in that the fastening member (41) is a cable or rope or tube clip.

**Revendications**

1. Dispositif pour la pose ultérieure d'au moins un autre câble (13) dans un tube protecteur (14) déjà garni d'au moins un câble (16), caractérisé par un double fond (12, 12', 12'', 12''', 12'''') pouvant être inséré dans le tube protecteur (14), divisant l'espace intérieur de ce tube en une zone pour le ou les câbles présents et en une autre zone pour le ou les câbles encore à poser, ce double fond étant constitué par une bande plate, dans le sens transversal résistant à la flexion, et dans le sens longitudinal résistant à la flexion par compression axiale, toutefois déformable, et munie au moins à son extrêmité avant pénétrant dans le tube protecteur (14), de part et d'autre, d'un dispositif de guidage en hauteur (33, 33', 33'') s'appuyant sur la paroi intérieure (26) du tube, et du côté frontal, d'un dispositif de guidage en longueur (22, 22', 22'', 22''') le dispositif de guidage en hauteur (33, 33', 33'') et le dispositif de guidage en longueur (22, 22', 22'', 22''') étant conçus de telle façon que pendant l'introduction de la bande dans le tube protecteur (14), le premier assure une distance déterminée de la bande au-dessus de ou des câbles déjà posés (16) et le deuxième effectue le guidage le long du ou des câbles (16) déjà existants.

2. Dispositif selon la revendication 1, caractérisé en ce que la largeur du double fond (12, 12', 12'', 12''', 12''''), y compris son dispositif de guidage en hauteur (33, 33', 33''), est pratiquement identique au diamètre intérieur du tube protecteur (14).

3. Dispositif selon les revendications 1 ou 2, caractérisé en ce que l'extrémité avant du double fond (12, 12'''') peut être raccordé de manière amovible au câble (13) à poser et/ou à au moins un câble de traction et/ou au moins un tube vide (71).

4. Dispositif selon l'une des revendications 1 à 3, caractérisé en ce que le dispositif de guidage de câble (22''') est formé intégralement sur l'extrêmité avant du double fond (12''') (figure 10).

5. Dispositif selon l'une des revendications 1 à 3, caractérisé en ce que le dispositif de guidage de câble (22, 22') est prevu sur un bâti (17, 17') pouvant être inséré dans le tube protecteur (14), et pouvant être relié à la bande formant le double fond (12)- de préférence de manière amovible (figures 1 à 7).

6. Dispositif selon la revendication 5, caractérisé en ce que le bâti (17, 17') est muni de part et d'autre des dispositifs de guidage en hauteur (33, 33') s'appuyant sur la paroi intérieure (26) du tube protecteur (14).

7. Dispositif selon l'une des revendications 1 à 5, caractérisé en ce que la bande constituant le double fond (12'', 12''', 12'''') est munie sur toute sa longueur, des deux côtés, du dispositif de guidage en hauteur (33'') s'appuyant sur la paroi intérieure (26) du tube protecteur (14).

8. Dispositif selon l'une des revendications précédentes, caractérisé en ce que le double fond (12) ou le bâti (17, 17') peuvent être accouplés à une tige de poussée ou de traction (38).

9. Dispositif selon l'une des revendications 1 à 7, caractérisé en ce qu'au moins une bande en acier (63, 63') peut être intégrée au double fond (12'', 12''') (figures 8, 9; 11, 12).

10. Dispositif selon l'une des revendications précédentes, caractérisé en ce que le dispositif de guidage en hauteur (33) est formé par des billes (32) logées dans des poches (31) latérales du bâti (17) et/ou du double fond (12).

11. Dispositif selon l'une des revendications 3 ou 5 à 10, caractérisé en ce que le dispositif de guidage de câble (22, 22', 22'') est constitué par un cylindre qui est monté en rotation sur un axe (21) s'étendant dans le sens du diamètre du tube (14).

12. Dispositif selon la revendication 11, caractérisé en ce que le cylindre (22) est disposé dans une cavité (19) du bâti (17) et l'axe (21) esr fixé dans une fourche (18) formant la cavité (19) (figures 1, 2).

13. Dispositif selon les revendications 11 ou 12, caractérisé en ce que le cylindre (22) est muni d'une gorge (23) rotative s'étendant sur toute sa longueur (figures 2, 3).

14. Dispositif selon la revendication 8, caractérisé en ce que la tige de poussée ou de traction (38) est constituée de tiges tubulaires (39) individuelles, reliées entre elles en articulation.

15. Dispositif selon l'une des revendications 8 ou 9, caractérisé en ce que la tige de poussée ou de traction (38) ou le double fond (12, 12', 12'', 12''', 12'''') peuvent être reliés à un dispositif d'entraînement.

16. Dispositif selon la revendication 15, caractérisé en ce que le dispositif d'entraînement présente deux poulies ou cylindres entre lesquels la tige tubulaire (38) ou le double fond (12) peuvent passer avec un contact de friction et dont au moins l'un est muni d'un arbre moteur.

17. Dispositif selon l'une des revendications précédentes, caractérisé en ce que la bande constituant le double fond (12, 12' 12'', 12''', 12'''') est en matière plastique.

18. Dispositif selon la revendication 17, caractérisé en ce que la bande présente une protection métallique.

19. Dispositif selon l'une des revendications précédentes, caractérisé en ce que la bande constituant le double fond (12, 12', 12'', 12''', 12'''') peut être enroulée.

20. Dispositif selon l'une des revendications 7 à 19, caractérisé en ce que la bande constituant le double fond (12'', 12'''', 12''''') est muni de bordures (61, 61') en forme de boudin (figures 8 à 12).

21. Dispositif selon la revendication 20, caractérisé en ce que les bordures (61, 61') en forme de boudin du double fond (12'', 12''', 12''') sont munies de cuvettes à billes (43'') disposées à distance, dans le sens longitudinal, pour recevoir par encliquetage les billes (44'') appartenant au dispositif de guidage en hauteur (33'').

22. Dispositif selon l'une des revendications précédentes, caractérisé en ce que la bande constituant le double fond (12'''') est munie, sur sa face supérieure, d'un ou de plusieurs tubes vides (71), de préférence flexibles (figure 12).

23. Dispositif selon la revendication 22, caractérisé en ce que le ou les tubes vides (71) sont reliés entre eux, et avec le double fond (12'''') à distances régulières.

24. Dispositif selon l'une des revendications 1 à 21, caractérisé en ce que le bâti (17) ou le double fond (12) sont munis d'un organe de fixation (41) pour au moins un câble supplémentaire à poser (13) et/ou au moins un câble de traction et/ou au moins un tube vide (71).

25. Dispositif selon la revendication 24, caractérisé en ce que l'organe de fixation (41) est un dispositif de serrage de câble ou de tube.

Fig.1

Fig.2

Fig.3

Fig.4

Fig.5

*Fig.6*

*Fig.7*

Fig.8

Fig.9

Fig.10

7

Fig.11

Fig.12